# EUROPEAN PATENT APPLICATION

(11) **EP 1 758 061 A1**
(43) Date of publication of application: **28.02.2007**
(21) Application number: 05739111.2
(22) Date of filing: 11.05.2005
(51) Int. Cl.: G06T 15/00, G06T 17/40, G06F 3/00, G09G 5/00, G09G 5/36

(54) **DISPLAY, DISPLAYING METHOD, INFORMATION RECORDING MEDIUM, AND PROGRAM**

(30) Priority: 11.05.2004 JP 2004140693
(71) Applicant: Konami Digital Entertainment Co., Ltd., Minato-ku Tokyo 106-6114 (JP)
(72) Inventor: FUJII, Daisuke, c/o Konami Digital Entertainment, Minato-ku, Tokyo 1066114 (JP)
(74) Representative: Rüger, Barthelt & Abel Patentanwälte
(86) International application number: PCT/JP2005/008585
(87) International publication number: WO 2005/109345

(57) **Abstract**

In a display (201) suitable for presenting a virtual three-dimensional space to an observer in an easy-to-understand manner by three-dimensional graphics display even in a case where the area occupied by an object in the screen increases, a projecting unit (202) projects, onto a first projection plane, the appearance of each object to be transparented (hereinafter referred to as "transparency object"), among object placed in the virtual three-dimensional space, an obtaining unit (203) obtains the area over which the appearance of each transparency object is projected on the first projection plane, and a display unit (204) displays an image generated by projecting, onto a second projection plane, the appearance of an object that is not to be transparented, among the objects placed in the virtual space, and projecting the appearance of each transparency object on the second projection plane at a transparency degree pre-associated with the obtained area.

## Description

### Technical Field

The present invention relates to a display and a displaying method suitable for showing a virtual three-dimensional space to an observer in an easy-to-understand manner by three-dimensional graphics display even in a case where the area occupied by an object in the screen is large such as in a case where an object placed in the virtual three-dimensional space comes too closely to the viewpoint, etc., a computer-readable information recording medium storing a program for realizing these on a computer, and the program.

### Background Art

Conventionally, such techniques have been proposed, where a plurality of objects are placed in a virtual three-dimensional space, and with elapse of time in the virtual three-dimensional space taken into consideration, these objects are appropriately moved along with the elapse of time to try various simulations and to display, by three-dimensional graphics, the state of these objects as observed from a predetermined viewpoint along a predetermined sight line. Further, such techniques are also proposed, which change the position of the viewpoint and the sight line along which the three-dimensional space is observed along with the elapse of time, and such techniques typically include one that sets a viewpoint on any of the objects and sets the sight line along which the three-dimensional space is observed in a direction in which the set object moves, or one that sets such a sight line by the very sight line of the set object.

A technique for such three-dimensional graphics is disclosed in the literature indicated below.
Patent Literature 1: Unexamined Japanese Patent Application KOKAI Publication No. H11-197357

In such three-dimensional graphics techniques, in a case where the image of an object occupies most of the area of the screen such as in a case where the display-target object comes very closely to the viewpoint, etc., it becomes impossible in some case to know the state of the virtual three-dimensional space, as the other objects are hidden behind the object.

Meanwhile, in the case where the view point and a display-target object come too closely, a so-called "polygon missing" or a normally impossible situation (for example, the viewpoint entering the inside of an object having no hollow, etc.) occurs and the displayed screen might be unnatural.

### Disclosure of Invention

### Problem to be Solved by the Invention

Hence, a technique for showing the state of the virtual three-dimensional space to an observer in an easy-to-understand manner even in such a case has been demanded.

The present invention was made to solve the above-described problem, and an object of the present invention is to provide a display and a displaying method suitable for showing a virtual three-dimensional space to an observer in an easy-to-understand manner even in a case where an object placed in the virtual three-dimensional space comes too closely to the viewpoint, a computer-readable information recording medium storing a program for realizing these on a computer, and the program.

### Means or Solving the Problem

To achieve the above object, the following invention will be disclosed according to the principle of the present invention.

A display according to a first aspect of the present invention comprises a projecting unit, an obtaining unit, and a display unit, which are configured as follows.

That is, the projecting unit projects, onto a first projection plane, an appearance of each object to be transparented (hereinafter referred to as "transparency object"), among objects placed in a virtual three-dimensional space.

In ordinary three-dimensional graphics processing, the outer shape of an object placed in a virtual three-dimensional space (in case of an object having a transparent portion, the outer shape includes the inner portion of the object that can be seen through the transparent portion) has to be displayed on a two-dimensional screen. Hence, three-dimensional coordinates are projected at two-dimensional coordinates by various techniques such as parallel projection, one-point projection, etc. The projecting unit performs such projection onto the first projection plane.

Meanwhile, the obtaining unit obtains an area over which the appearance of each the transparency object is projected on the first projection plane.

Here, the first projection plane is for obtaining a rough measure of the size of a transparency object, when it is displayed on the screen. In a case where the transparency object has a simple shape (for example, a sphere or a rectangular parallelepiped), it is possible to obtain the area over which the transparency object is projected without performing projection, if how the coordinates of control points such as vertexes and center point of the object will be converted is checked. However, in case of a complex shape, it is not necessarily easy. According to the present invention, since the object is once projected on the first projection plane, it is possible to easily obtain the area over which the object is projected, even if it is a transparency object having a complex shape.

Further, the display unit displays an image generated by projecting, onto a second projection plane, an appearance of an object that is not to be transparented (hereinafter referred to as "opaque object"), among the objects placed in the virtual space, and projecting the appearance of each the transparency object on the second projection plane at a transparency degree pre-associated with the obtained area.

Generally, a transparency object is an object that is likely to come closely to the viewpoint in the virtual three-dimensional space, while an opaque object is an object that is located at a very far place from the viewpoint or unlikely to come closely to the viewpoint. For example, in case of a display that displays a state of a car race held in a virtual game space, that is captured from a vehicle-mounted camera, other cars and obstacles are to be the transparency objects, and walls building up the course, and scenery showing in the distance such as buildings, trees, mountains, river, lake, sea, etc. constitute opaque objects.

According to the present invention, opaque objects are projected on the second projection plane without changing their transparency degree, and transparency objects are projected on the second projection plane by changing their transparency degree depending on the area thereof when they are displayed on the screen (this is equal to the area thereof when they are projected on the first projection plane). And the result of projection on the second projection plane is displayed as the generated image. Here, the first projection plane is a plane that is used temporarily, and not presented to the user of the display.

According to the present invention, it becomes possible to show opaque objects and transparency object to the user in an easy-to-understand manner, by determining the transparency degree of the transparency objects depending on the area over which the transparency objects are displayed on the screen (this is substantially equivalent to the rate of occupation in the screen).

The display according to the present invention may be configured such that the transparency degree is pre-associated with the area, such that the transparency degree becomes higher as the obtained area is larger in the display unit.

Generally, when an object is displayed such that it occupies a large area of the screen, the other objects are hidden behind the object and become unseeable. Hence, according to the present invention, the transparency degree for displaying the object is increased as the area occupied by the object in the screen becomes larger.

According to the present invention, even in a case where an object comes too closely to the viewpoint and occupies a large area of the screen to hide the other objects, it is possible to make the other objects be seen through the object by increasing the transparency degree of the object, thereby to appropriately show the state of the virtual three-dimensional space to the user of the display.

Further, in the display according to the present invention, for each the transparency object, the projecting unit may be configured to use a bit map image area in which all pixel values represent a predetermined background color as the first projection plane, and to project the appearance of the transparency object on the bit map image area, and the obtaining unit may be configured to obtain the area over which the appearance of the transparency object is projected, from a number of those that are included in the bit map image area, that have pixel values which are different from values of the predetermined background color.

According to the present invention, a bit map image area made up of an assembly of pixels is used as the first projection plane. Then, after the bit map image area is fully painted with an appropriate background color (it may be a color inexistent in the real world, or may be a color such as black, blue, etc.), the transparency object is "depicted" on the bit map image area by using the same three-dimensional graphic processing as used in the display unit. Thereafter, by counting the number of pixels that have pixel values which are not of the background color, the area over which the transparency object is projected can be obtained as the number of such pixels (or, the product of multiplication between the size of the pixels and the number of pixels).

In this technique, three-dimensional techniques of various types that are already widely used can be applied to the projection onto the first projection plane, and the projection onto the first projection plane can be easily realized by using graphics processing hardware that is used in a general-purpose computer or a game device.

According to the present invention, by using a bit map image area as the first projection plane, it is possible to easily obtain the area over which the transparency object is displayed on the screen and to simplify and speed up the process.

Further, the display according to the present invention may be configured such that control points are assigned to each the transparency object beforehand, the projecting unit projects the control points on the first projection plane, and the obtaining unit obtains an area of a convex polygon formed by connecting the control points projected on the first projection plane, as the area over which the appearance of the transparency object is projected.

According to the present invention, a transparency object is not "depicted" on the first projection plane, but the control points of the transparency object are projected on the first projection plane. Specifically, the coordinates of the projected points of the control points on the first projection plane are used.

Then, a convex polygon whose vertexes or inner points coincide with the control points is considered, and the area of this convex polygon is treated as the "area over which the transparency object is projected".

According to the present invention, even in case of an object having a complicated shape, it is possible to easily obtain the area occupied by the object in the screen by selecting control points of the object, making it possible to simplify and speed up the process. Further, in case of an object that is amorphous such as sand cloud, liquid, etc., it becomes possible to treat them as transparency objects by defining the control points.

The display according to the present invention may be configured such that association between area and transparency degree is defined beforehand for each the transparency object, and the display unit obtains the transparency degree of the transparency object, from the association between the area and the transparency degree that is defined beforehand for each the transparency object.

That is, according to the present invention, the area occupied in the screen, and the transparency degree are varied from one transparency object to another. For example, the degree of how the transparency is increased in response to the increase in the area is raised for a transparency object that is considered to be unimportant to the user, and the degree of how the transparency is increased in response to the increase in the area is reduced for a transparency object that is considered to be important.

According to the present invention, it is possible to vary the transparency degree from one transparency object to another, and it becomes possible to show the state of the virtual three-dimensional space to the user appropriately, depending on, for example, the degree of importance of the objects.

A displaying method according to a second aspect of the present invention is implemented in a display comprising a projecting unit, an obtaining unit, and a display unit, and comprises a projecting step, an obtaining step, and a displaying step, which are configured as follows.

First, at the projecting step, the projecting unit projects, onto a first projection plane, an appearance of each object to be transparented (hereinafter referred to as "transparency object"), among objects placed in a virtual three-dimensional space.

Meanwhile, at the obtaining step, the obtaining unit obtains an area over which the appearance of each the transparency object is projected on the first projection plane.

Further, at the displaying step, the display unit displays an image generated by projecting, onto a second projection plane, an appearance of an object that is not to be transparented (hereinafter referred to as "opaque object"), among the objects placed in the virtual space, and projecting the appearance of each the transparency object on the second projection plane at a transparency degree pre-associated with the obtained area.

A program according to another aspect of the present invention is configured to control a computer to function as the above-described display, or to control a computer to perform the above-described displaying method.

The program according to the present invention can be stored on a computer-readable information recording medium such as a compact disk, a flexible disk, a hard disk, a magneto optical disk, a digital video disk, a magnetic tape, a semiconductor memory, etc.

The above-described program can be distributed and sold via a computer communication network, independently from a computer on which the program is executed. Further, the above-described information recording medium can be distributed and sold independently from the computer.

### Effect of the Invention

According to the present invention, it is possible to provide a display and a displaying method suitable for showing a virtual three-dimensional space to an observer in an easy-to-understand manner by three-dimensional graphics display even in a case where the area occupied by an object in the screen is large such as in a case where an object placed in the virtual three-dimensional space comes too closely to the viewpoint, etc., a computer-readable information recording medium storing a program for realizing these on a computer, and the program.

### Brief Description of Drawings

[FIG. 1] It is an explanatory diagram showing a schematic structure of a typical game device on which a display according to one embodiment of the present invention is realized.
[FIG. 2] It is an exemplary diagram showing a schematic structure of a display according to one embodiment of the present invention.
[FIG. 3] It is a flowchart showing the flow of control of a displaying method performed by the present display.
[FIG. 4] It is an explanatory diagram showing an example of a display displayed by the present display.
[FIG. 5] It is an explanatory diagram showing an example of a display displayed by the present display.

### Explanation of Reference Numerals

- 100: game device
- 101: CPU
- 102: ROM
- 103: RAM
- 104: interface
- 105: controller
- 106: external memory
- 107: image processing unit
- 108: DVD-ROM drive
- 109: NIC
- 110: audio processing unit
- 201: display
- 202: projecting unit
- 203: obtaining unit
- 204: display unit
- 701: screen
- 711: car as transparency object

### Best Mode for Carrying Out the Invention

The embodiments of the present invention will be explained below. Embodiments in which the present invention is applied to a game device on which three-dimensional graphics are displayed will be explained below in order to facilitate understanding. However, the present invention can likewise be applied to information processing apparatuses such as computers of various types, PDAs (Personal Data Assistants), portable telephones, etc. That is, the embodiments to be explained below are intended for explanation, not to limit the scope of the present invention. Accordingly, though those having ordinary skill in the art could employ embodiments in which each element or all the elements of the present embodiments are replaced with equivalents of those, such embodiments will also be included in the scope of the present invention.

### Embodiment 1

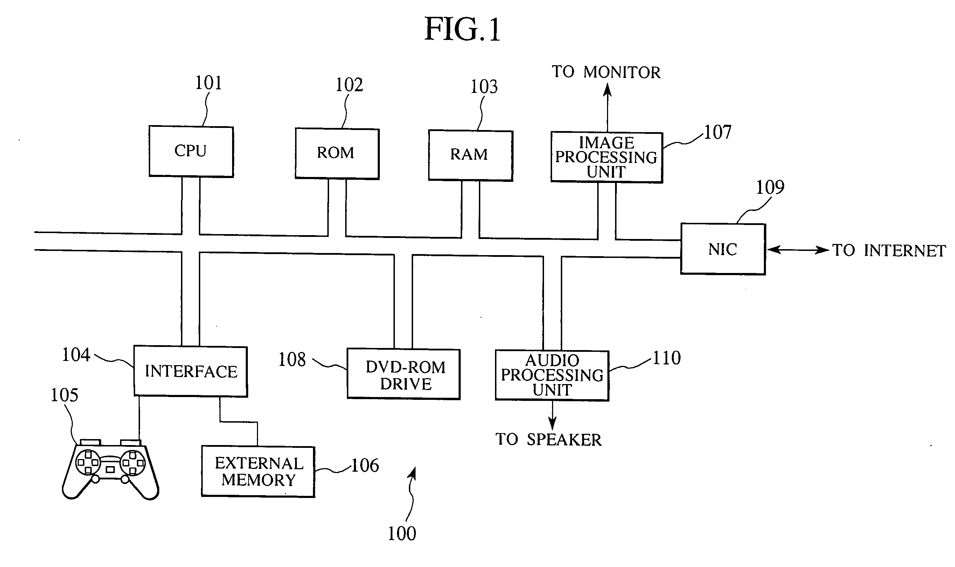

FIG. 1 is an explanatory diagram showing a schematic structure of a typical game device on which a display according to the present invention will be realized. The following explanation will be given with reference to this diagram.

A game device 100 comprises a CPU (Central Processing Unit) 101, a ROM 102, a RAM 103, an interface 104, a controller 105, an external memory 106, an image processing unit 107, a DVD-ROM drive 108, an NIC (Network Interface Card) 109, and an audio processing unit 110.

By loading a DVD-ROM storing a game program and data onto the DVD-ROM drive 108 and turning on the power of the game device 100, the program will be executed and the display according to the present embodiment will be realized.

The CPU 101 controls the operation of the entire game device 100, and is connected to each element to exchange control signals and data. Further, by using an ALU (Arithmetic Logic Unit) (unillustrated), the CPU 101 can perform arithmetic operations such as addition, subtraction, multiplication, division, etc., logical operations such as logical addition, logical multiplication, logical negation, etc., bit operations such as bit addition, bit multiplication, bit inversion, bit shift, bit rotation, etc. toward a storage area, or a register (unillustrated), which can be accessed at a high speed. Further, the CPU 101 itself may be designed to be able to rapidly perform saturate operations such as addition, subtraction, multiplication, division, etc. for dealing with multimedia processes, vector operations such as trigonometric function, etc. or may realize these with a coprocessor.

The ROM 102 stores an IPL (Initial Program Loader) to be executed immediately after the power is turned on, execution of which triggers the program stored on the DVD-ROM to be read into the RAM 103 and executed by the CPU 101. Further, the ROM 102 stores a program and various data for an operating system necessary for controlling the operation of the entire game device 100.

The RAM 103 is for temporarily storing data and programs, and retains the program and data read out from the DVD-ROM, and other data necessary for game proceedings and chat communications. Further, the CPU 101 performs processes such as securing a variable area in the RAM 103 to work the ALU directly upon the value stored in the variable to perform operations, or once storing the value stored in the RAM 103 in the register, performing operations toward the register, and writing back the operation result to the memory, etc.

The controller 105 connected through the interface 104 receives an operation input given by the user when playing a game such as a racing game, etc.

The external memory 106 detachably connected through the interface 104 rewritably stores data indicating the play status (past achievements, etc.) of a racing game, etc., data indicating the progress status of the game, data of chat communication logs (records), etc. The user can store these data on the external memory 106 where needed, by inputting instructions through the controller 105.

The DVD-ROM to be loaded on the DVD-ROM drive 108 stores a program for realizing a game and image data and audio data accompanying the game. Under the control of the CPU 101, the DVD-ROM drive 108 performs a reading process on the DVD-ROM loaded thereon to read out a necessary program and data, which are to be temporarily stored on the RAM 103, etc.

The image processing unit 107 processes the data read out from the DVD-ROM by means of the CPU 101 and an image calculation processor (unillustrated) provided in the image processing unit 107, and thereafter stores the data in a frame memory (unillustrated) provided in the image processing unit 107. The image information stored in the frame memory is converted into a video signal at a predetermined synchronization timing and output to a monitor (unillustrated) connected to the image processing unit 107. Thereby, image displays of various types are available.

The image calculation processor can rapidly perform transparent operations such as overlay operation or α blending of two-dimensional images, and saturate operations of various types.

Further, the image calculation processor can also rapidly perform an operation for rendering, by a Z buffer method, polygon information placed in a virtual three-dimensional space and having various texture information added, to obtain a rendered image of the polygon placed in the virtual three-dimensional space as seen from a predetermined view position along a predetermined direction of sight line.

Further, by the CPU 101 and the image calculation processor working in cooperation, a character string as a two-dimensional image can be depicted on the frame memory, or depicted on the surface of each polygon, according to font information defining the shape of the characters.

The NIC 109 is for connecting the game device 100 to a computer communication network (unillustrated) such as the Internet, etc., and comprises a 10BASE-T/100BASE-T product used for building a LAN (Local Area Network), an analog modem, an ISDN (Integrated Services Digital Network) modem, or an ADSL (Asymmetric Digital Subscriber Line) modem for connecting to the Internet by using a telephone line, a cable modem for connecting to the Internet by using a cable television line, or the like, and an interface (unillustrated) for intermediating between these and the CPU 101.

The audio processing unit 110 converts audio data read out from the DVD-ROM into an analog audio signal, and outputs the signal from a speaker (unillustrated) connected thereto. Further, under the control of the CPU 101, the audio processing unit 110 generates sound effects and music data to be sounded in the course of the game, and outputs the sounds corresponding to the data from the speaker.

In a case where the audio data recorded on the DVD-ROM is MIDI data, the audio processing unit 110 refers to the music source data included in the data, and converts the MIDI data into PCM data. Further, in a case where the audio data is compressed audio data of ADPCM format, Ogg Vorbis format, etc., the audio processing unit 110 expands the data and converts it into PCM data. By D/A (Digital/Analog) converting the PCM data at a timing corresponding to the sampling frequency of the data and outputting the data to the speaker, it is possible to output the PCM data as audios.

Aside from the above, the game device 100 may be configured to perform the same functions as the ROM 102, the RAM 103, the external memory 106, the DVD-ROM to be loaded on the DVD-ROM drive 108, etc. by using a large-capacity external storage device such as a hard disk, etc.

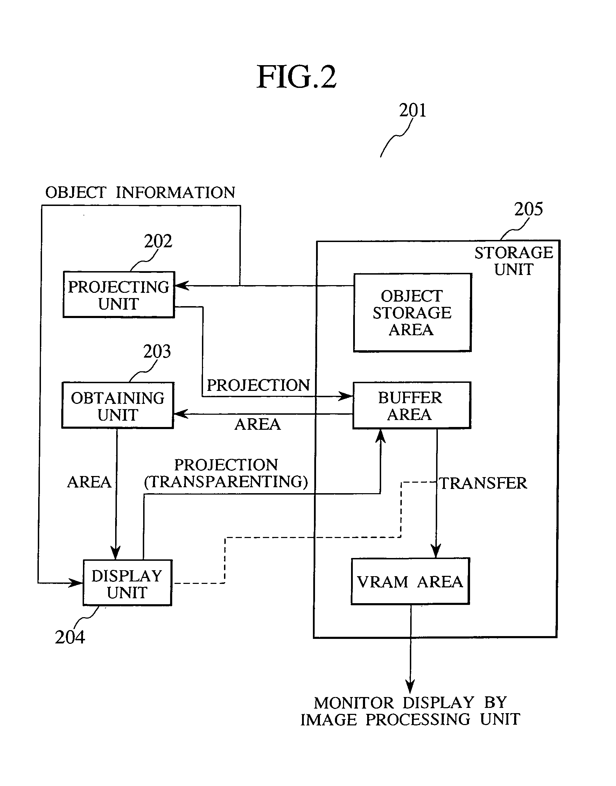

FIG. 2 is an exemplary diagram showing a schematic structure of a display according to one embodiment of the present invention. The following explanation will be given with reference to this diagram.

The display 201 according to the present embodiment comprises a projecting unit 202, an obtaining unit 203, and a display unit 204.

Further, the following areas are secured in a storage unit 205 constituted by the RAM 103, etc.
(a) An object storage area for storing shapes and texture information of objects placed in a virtual three-dimensional space, whether or not to transparent the objects, types of association between area and transparency degree, etc. A general three-dimensional graphics technique can be used for shapes (vertexes defining the shapes, coordinates of control points such as a center point, etc.) and texture information of the objects. According to the present embodiment, one feature is to store for each object whether or not to transparent the object, and a type of association between area and transparency degree (a parameter or the like that defines association) in a case where the object is to be transparented.
(b) A buffer area for storing a bit map image made up of an assembly of pixels. This is a temporary storage area for obtaining the area over which it is assumed that an object is displayed.
(c) A VRAM (Video RAM) area for storing bit map images to be displayed on the screen. The image processing unit 107 periodically transfers images to the monitor screen at a cycle determined by a vertical synchronization interrupt, based on the information stored in the VRAM area.

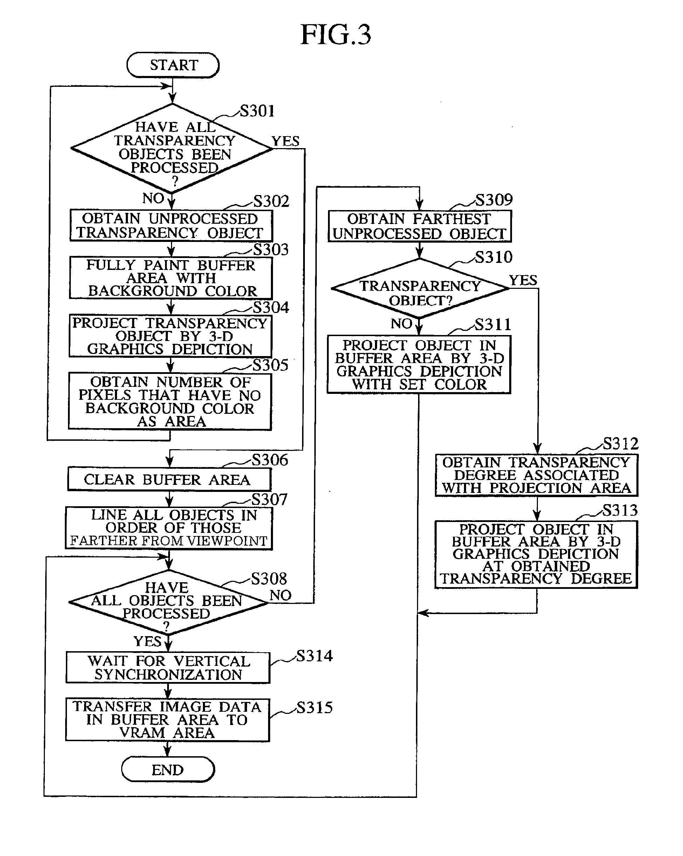

FIG. 3 is a flowchart showing the flow of control of a displaying process performed by the display 201 according to the present embodiment. The following explanation will be given with reference to this diagram.

First, in the display 201, the display unit 204 repeats the processes of step S301 to step S305 for each of those (transparency objects), among the objects stored in the storage unit 205, for which a message to the effect that it is to be transparented is stored. That is, the display unit 204 checks whether or not processes have been done for all the transparency objects (step S301), and obtains one unprocessed transparency object (step S302) in a case where processes have not be done for the all (step S301; No).

Then, the buffer area secured in the RAM 103 is fully painted with an appropriate background color (step S303). For example, in a case where a color displayed on the screen is expressed by a 15-bit color in which red, blue, and green are each assigned 5 bits, 2 bytes are assigned to each pixel of the buffer area. And 0 to 32767 are used as pixel values. In this case, if any of 32768 to 65535 to which a highest-order bit is associated is used as the pixel value of the background color, pixels that are to be painted because an opaque object is to be projected thereon can be distinguished from the background color.

Then, the appearance of the transparency object is projected on the buffer area by an ordinary three-dimensional graphics technique (step S304). Thus, the CPU 101 and the image processing unit 107 function as the projecting unit 202 in cooperation with the RAM 103, where the buffer area constitutes a first projection plane.

In ordinary three-dimensional graphics processing, the outer shape of an object placed in a virtual three-dimensional space (in case of an object having a transparent portion, the outer shape includes the inner portion of the object that can be seen through the transparent portion) is displayed on a two-dimensional screen. Hence, three-dimensional coordinates are projected at two-dimensional coordinates by various techniques such as parallel projection, one-point projection, etc. As described above, when the transparency object is projected on the buffer area by a three-dimensional graphics technique, the pixel values of the site onto which the object is projected take a value of any of 0 to 32767, provided that a 15-bit color is used for the object.

When the projection of one transparency object is completed in this manner, the obtaining unit 203 counts the number of pixels (2-byte areas) in the buffer area, that have a pixel value (0 to 32767) other than the pixel values (32768 to 65535) of the background color, in order to obtain the area over which the appearance of the transparency object is projected (step S305). That is, the CPU 101 functions as the obtaining unit 203 in cooperation with the RAM 103. When the area of the currently processed object after being projected is obtained in this manner, the flow returns to step S301.

On the other hand, in a case where the processes of step S302 to step S305 have been performed for all the transparency objects (step S301; Yes), i.e., in a case where the area of every transparency object when they are to be displayed on the screen is obtained, the flow goes to processes at step S306 and thereafter.

First, the buffer area is fully painted with a predetermined background color, thereby to clear the buffer area (step S306). This may not be the same as the above-described background color. Typically, 0 (black) or 32767 (white) is used.

Then, the objects placed in the virtual three-dimensional space are lined in an order of those that are farther from the viewpoint (step S307). This is so-called Z buffer method.

Next, the processes of step S308 to step S313 are repeated for the lined objects, in the order of those that are farther from the viewpoint. That is, whether or not processes have been done for all the objects is checked (step S308), and the farthest one among the unprocessed objects is obtained (step S309) in a case where the processes have not been done for the all (step S308; No).

Then, it is checked whether this object is a transparency object or not (whether an opaque object) (step S310). In a case where the object is an opaque object (step S310; No), the display unit 204 projects the opaque object on the buffer area by three-dimensional graphic processing with a color which is set for the opaque object (typically, defined by texture information) (step S311), and the flow returns to step S308.

On the other hand, in a case of a transparency object (step S310; Yes), the display unit 204 obtains the transparency degree that is associated with the area, which has been obtained at step S305 for that transparency object (step S312). It is desirable that this association is made in such a manner as to raise the transparency degree as the area is larger.

The degree of how the transparency degree is raised can be changed for each transparency object. That is, step-wise association patterns of various types may be prepared and which association pattern is to use may be stored in the object storage area in the RAM 103. With reference to this association pattern, the transparency degree can be obtained from the area.

Then, the display unit 204 projects the transparency object onto the buffer area by three-dimensional graphics processing at the transparency degree obtained (step S313), thereby applies the so-called α blending. Thereafter, the flow returns to step S308.

When the processes have been done for all the objects (step S308; Yes) and the image to be displayed is generated in the buffer region by Z buffer method, three-dimensional graphics processing, and α blending technique, a vertical synchronization interrupt is waited for (step S314), and the generated image is transferred to the VRAM area from the buffer area (step S315) after an interrupt occurs, then this processes is terminated. This is the so-called double buffering technique, which is for preventing flickers in the screen display. The image processing unit 107 performs parallel processing such that the image generated in the VRAM area is displayed on the screen of the monitor.

In this manner, the CPU 101 functions as the display unit 204 in cooperation with the image processing unit 107 and the RAM 103.

Generally, a transparency object is an object that is likely to come closely to the viewpoint in the virtual three-dimensional space, while an opaque object is an object that is located at a very far place from the viewpoint or unlikely to come closely to the viewpoint. For example, given that the display 201 displays a state of a car race held in a virtual game space, that is captured from a vehicle-mounted camera, other cars and obstacles are to be the transparency objects, and walls building up the course, and scenery showing in the distance such as buildings, trees, mountains, river, lake, sea, etc. constitute opaque objects.

According to the present embodiment, opaque objects are projected at the transparency degree defined therefor (generally, opaque as is), and transparency objects are projected by α blending, with their α value changed according to the projection area. As a result, even in a case where an object comes too closely to the viewpoint and occupies a large area of the screen to hide the other objects, it is possible to make the other objects be seen through that object by raising the transparency degree of that object. Accordingly, the user can appropriately grasp the state of the virtual three-dimensional space.

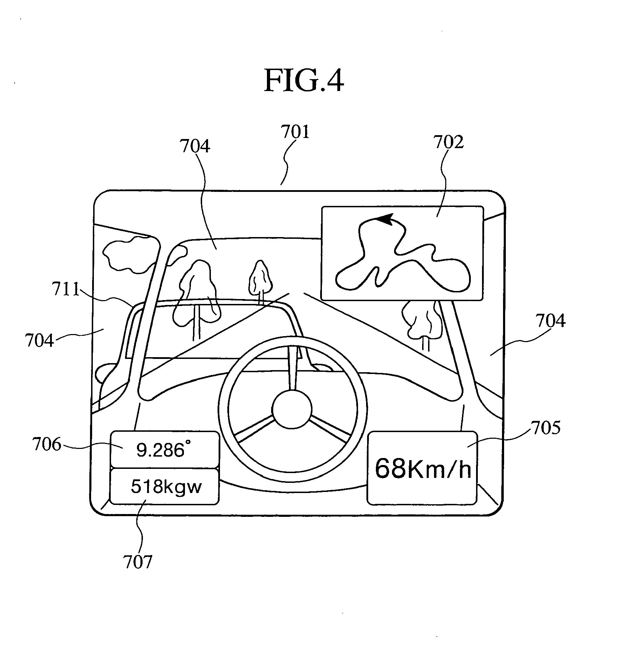

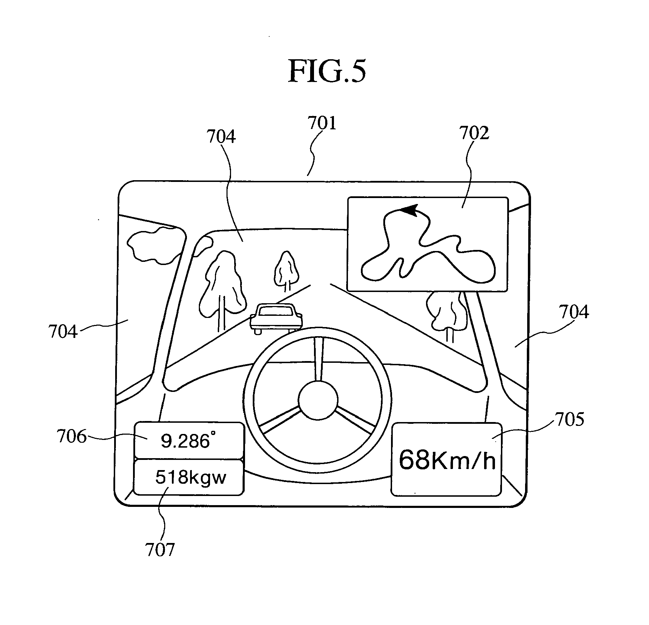

FIG. 4 and FIG. 5 show the states of the display in a case where the present invention is applied to a car race game. In these diagrams, another car 711 is displayed on a screen 701, and the transparency object is this car 711. The window frames, the steering wheel, the meters, etc. of the user's car are opaque objects, and not to be transparented.

In FIG. 4, the car 711 is displayed transparently to let the background show. In FIG. 5, the car 711 in the screen 701 is displayed clearly so as to conceal the background. On one hand, this is because the area over which the car 711 is projected is different. In a case where it is projected largely as in FIG. 4, the transparency degree becomes high. Because of this, no great part of the course is hidden behind the car 711, and the state of the road surface becomes recognizable by the player. In a case where it is projected in a small size as in FIG. 5, the transparency degree is low (opaque). In this case, since most of the state of the road surface is shown to the player, it is considered that there is little need of displaying the car 711 transparently, and it is thus displayed in the normal manner.

Further, according to the present embodiment, the degree of transparenting (association between area and transparency degree) can be changed for each transparency object, which makes it possible to, for example, show the state of the virtual three-dimensional space appropriately to the user according to the degree of importance of the objects.

### Embodiment 2

According to the above-described embodiment, a transparency object is spread on a bit map image, and the projection area of the transparency object is obtained based on the number of pixels thereof. According to the present embodiment, the projection area of the transparency object will be obtained by using the coordinates of control points, such as vertexes, etc. of the transparency object.

As disclosed in [Patent Literature 1], there is a method of determining a collision between objects, by considering a sphere and a rectangular parallelepiped which include the objects and determining whether the objects will collide based on whether the sphere and the rectangular parallelepiped will collide, to reduce the amount of calculation. The present embodiment is based on an idea similar to this.

That is, control points corresponding to the shape of a transparency object are assigned beforehand. Typically, it is advisable to use the vertexes of the smallest rectangular parallelepiped, pyramid, or rectangular column that includes the transparency object, or points arranged on the surface of the smallest sphere that includes the transparency object as the control points. However, this is not the only case.

It is desirable to limit the number of control points to a certain degree, in order to facilitate the process to be described below. Accordingly, it suffices if control points are selected such that the shape of the transparency object can be expressed approximately. For example, it is possible to express it by a triangular pyramid. This is because not so much strictness is required in the process for changing the transparency degree depending on the projection area of the transparency object, and approximate values are sufficient in many cases.

Then, to which coordinates on the screen the control points are to be projected by three-dimensional graphics processing is checked, and some or all of the control points that are projected are connected to make a convex polygon. The convex polygon must either have its vertexes at the projected points of the control points, or include the projected points of the control points in its interior. In a case where the object is expressed by a triangular pyramid, the convex polygon will be a triangle or a quadrangle.

Then, the area of the convex polygon is obtained from the vertexes, and this is used as the area over which the transparency object is to be projected on the first projection plane.

According to the present embodiment, even in case of an object having a complicated shape, it is possible to easily obtain the area occupied by the object in the screen by selecting control points of the object, making it possible to simplify and speed up the process. Further, in case of an object that is amorphous such as sand cloud, liquid, etc., it becomes possible to treat them as transparency objects by defining the control points.

The present application claims priority based on Japanese Patent Application No 2004-140693, the content of which is incorporated herein in its entirety.

### Industrial Applicability

As explained above, according to the present invention, it is possible to provide a display and a displaying method suitable for showing a virtual three-dimensional space to an observer in an easy-to-understand manner by three-dimensional graphics display even in a case where the area occupied by an object in the screen is large such as in a case where an object placed in the virtual three-dimensional space comes too closely to the viewpoint, etc., a computer-readable information recording medium storing a program for realizing these on a computer, and the program, and to apply these to realizing a racing game or an action game in a game device, and to virtual reality techniques for providing virtual experiences of various types.

## Claims

1. A display (201), comprising:
a projecting unit (202) which projects, onto a first projection plane, an appearance of each object to be transparented (hereinafter referred to as "transparency object"), among objects placed in a virtual three-dimensional space;
an obtaining unit (203) which obtains an area over which the appearance of each said transparency object is projected on said first projection plane; and
a display unit (204) which displays an image generated by projecting, onto a second projection plane, an appearance of an object that is not to be transparented (hereinafter referred to as "opaque object"), among the objects placed in the virtual space, and projecting the appearance of each said transparency object on said second projection plane at a transparency degree pre-associated with the obtained area.

2. The display (201) according to claim 1,
wherein the transparency degree is pre-associated with the area, such that the transparency degree becomes higher as the obtained area is larger in said display unit (204).

3. The display (201) according to claim 1,
wherein for each said transparency object,
said projecting unit (202) uses a bit map image area in which all pixel values represent a predetermined background color as said first projection plane, and projects the appearance of said transparency object on said bit map image area, and
said obtaining unit (203) obtains the area over which the appearance of said transparency object is projected, from a number of those that are included in said bit map image area, that have pixel values which are different from values of the predetermined background color.

4. The display (201) according to claim 1,
wherein control points are assigned to each said transparency object beforehand,
said projecting unit (202) projects said control points on said first projection plane, and
said obtaining unit (203) obtains an area of a convex polygon formed by connecting said control points projected on said first projection plane, as the area over which the appearance of said transparency object is projected.

5. The display (201) according to claim 1,
wherein association between area and transparency degree is defined beforehand for each said transparency object, and
said display unit (204) obtains the transparency degree of said transparency object, from the association between the area and the transparency degree that is defined beforehand for each said transparency object.

6. A displaying method, comprising:
a projecting step of projecting, onto a first projection plane, an appearance of each object to be transparented (hereinafter referred to as "transparency object"), among objects placed in a virtual three-dimensional space;
an obtaining step of obtaining an area over which the appearance of each said transparency object is projected on said first projection plane; and
a displaying step of displaying an image generated by projecting, onto a second projection plane, an appearance of an object that is not to be transparented (hereinafter referred to as "opaque object"), among the objects placed in the virtual space, and projecting the appearance of each said transparency object on said second projection plane at a transparency degree pre-associated with the obtained area.

7. A computer-readable information recording medium storing a program for controlling a computer to function as:
a projecting unit (202) which projects, onto a first projection plane, an appearance of each object to be transparented (hereinafter referred to as "transparency object"), among objects placed in a virtual three-dimensional space;
an obtaining unit (203) which obtains an area over which the appearance of each said transparency object is projected on said first projection plane; and
a display unit (204) which displays an image generated by projecting, onto a second projection plane, an appearance of an object that is not to be transparented (hereinafter referred to as "opaque object"), among the objects placed in the virtual space, and projecting the appearance of each said transparency object on said second projection plane at a transparency degree pre-associated with the obtained area.

8. A program for controlling a computer to function as:
a projecting unit (202) which projects, onto a first projection plane, an appearance of each object to be transparented (hereinafter referred to as "transparency object"), among objects placed in a virtual three-dimensional space;
an obtaining unit (203) which obtains an area over which the appearance of each said transparency object is projected on said first projection plane; and
a display unit (204) which displays an image generated by projecting, onto a second projection plane, an appearance of an object that is not to be transparented (hereinafter referred to as "opaque object"), among the objects placed in the virtual space, and projecting the appearance of each said transparency object on said second projection plane at a transparency degree pre-associated with the obtained area.
